# EUROPÄISCHE PATENTSCHRIFT

(11) **EP 0 554 243 B1**
(45) Veröffentlichungstag und Bekanntmachung des Hinweises auf die Patenterteilung: **02.11.1994**
(21) Anmeldenummer: 91903341.5
(22) Anmeldetag: 15.02.1991
(51) Int. Cl.: H02K 21/38, H02K 19/20, F02N 11/04

(54) **NACH DEM RELUKTANZ-PRINZIP ARBEITENDER MOTOR UND/ODER GENERATOR**
MOTOR AND/OR GENERATOR OPERATING ON THE RELUCTANCE PRINCIPLE
MOTEUR ET/OU GENERATEUR TRAVAILLANT SELON LE PRINCIPE DE RELUCTANCE

(30) Priorität: 22.10.1990 EP 90120220
(43) Veröffentlichungstag der Anmeldung: 11.08.1993
(73) Patentinhaber: SIEMENS AKTIENGESELLSCHAFT, 80333 München (DE)
(72) Erfinder: FREISE, Werner, D-6750 Kaiserslautern (DE); SCHMIDT, Helmut, D-8701 Reichenberg (DE); WEINHOLD, Wolfgang, D-8700 Würzburg (DE); WINTER, Udo, D-8702 Kürnach (DE); ZAPS, Klaus, D-8712 Astheim (DE)
(86) Internationale Anmeldenummer: EP9100302
(87) Internationale Veröffentlichungsnummer: WO9207411

(56) Entgegenhaltungen:
- EP-A- 0 103 821
- DE-A- 2 944 968
- DE-A- 3 335 626
- DE-C- 0 726 190
- FR-A- 0 841 103
- FR-A- 1 452 379
- US-A- 4 584 513

## Beschreibung

Die Erfindung bezieht sich auf einen nach dem Reluktanzprinzip arbeitenden Motor und/oder Generator gemäß Anspruch 1; ein nach dem Prinzip der statorerregten Synchronmaschine in Sektor-Bauweise arbeitender Motor und/oder Generator gemäß den Merkmalen a-c des Anspruchs 1 ist durch die EP-B1-0 103 821 bekannt.

Im bekannten Fall der EP-B1-0 103 821 sind die Sektorstator-Elemente eines Sektorstators durch einen axialen Abstandsraum voneinander gegenseitig getrennt. Die als Rotor des Motors und/oder Generators mitbenutzte Zylindermantelfläche eines Schwungrades, insbesondere der Kupplung einer Kraftfahrzeug-Verbrennungsmaschine, ist in Form von zwei Polzahnrädern gestaltet, die in einem gewissen axialen Abstand auf Lücke versetzt angeordnet sind.

Durch die DE-A-33 35 626 ist eine homopolar erregte ein- oder mehrphasige Wechselstrommaschine mit axial hintereinander angeordneten Ständerblechpaketen bekannt, zwischen deren Jochbögen axial magnetisierte Zusatzmagnete zur Streufeldkompensation eingefügt sind.

Der Arbeitswirkungsgrad eines Motors und/oder Generators der eingangs genannten Art kann durch Vermeidung eines unerwünscht großen Streufeldes mit geringem Aufwand dadurch erhöht werden, daß in den axialen Abstandsraum zwischen den Sektorstator-Elementen eines Sektorstators eine axial magnetisierte Dauermagnetanordnung aus jeweils sowohl den Jochbogen als auch die Statorzähne eines Sektorstator-Elementes abdeckenden Magnetteilen mit einer der Wicklungserregung in den Sektorstator-Elementen entgegengerichteten Magnetisierung angeordnet ist, derart daß sich deren Magnetfeld axial/tangential-radial in den Jochen der Sektorstator-Elemente bzw. radial über die Statorzähne, den Luftspalt, die versetzten Rotorpole und axial/tangential über das Rotorjoch schließt; zweckmäßigerweise sind die Magnetteile zu einer einstückigen Magnetanordnung aus einem gesinterten Formmagnet zusammengefaßt.

Durch das erfindungsgemäße Zusammenwirken der durch die Erregerwicklungsteile steuerbaren Erregung einerseits und der durch die Magnetanordnung gegebenen Dauermagnetisierung andererseits ist bei einfacher Steuerbarkeit der Erregung eine Reduzierung des Erregerwicklungskupfers möglich und ein unerwünschtes großes Streufeld, vor allem zwischen den Stirnflächen der axial voreinander liegenden Blechpakete der Sektorstator-Elemente, vermeidbar.

Zur Halterung der Magnetanordnung in dem axialen Abstandsraum zwischen den benachbarten Stirnseiten der Blechpakete der Sektorstator-Elemente kann z.B. ein gegenseitiges Verkleben der voreinanderliegenden Stirnseiten vorgesehen werden. Nach einer Ausgestaltung der Erfindung ist eine zusätzliche formschlüssige Sicherung, insbesondere ein Schutz gegen ein Herunterfallen der Magnetanordnung in den Rotorraum, mit einfachen konstruktiven Mitteln dadurch möglich, daß die der Magnetanordnung zugewandten Bleche mit Halterungsteilen versehen sind, die in besonders einfacher Weise in Form von unter das Magnetteil greifenden, an den radialen Enden der Statorzähne von diesen abgebogenen Zungen gebildet sind.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: eine stirnseitige Draufsicht auf ein Sektorstator-Element mit axial vorgesetzter Dauermagnetanordnung, gemäß Schnittverlauf I-I in Figur 2
- FIG 2: den in die Verbrennungsmaschine eines Kraftfahrzeuges eingebauten Sektorstator gemäß Teildarstellung in Figur 1 im Seitenschnitt gemäß Schnittverlauf II-II
- FIG 3: die axiale Draufsicht auf eine der Dauermagnetanordnung zugewandte Blechlamelle mit abgebogenen Laschen
- FIG 4: die seitliche Draufsicht auf einen Sektorstator mit übergreifenden Bügeln
- FIG 5: eine stirnseitige Draufsicht auf ein Sektorstator-Element mit aus der Symmetrie-Mittellinie seitlich versetztem, diskreten Polschenkel,
- FIG 6: im Teilausschnitt den Sektorstator gemäß Figur 5 im Schnittverlauf VI-VI

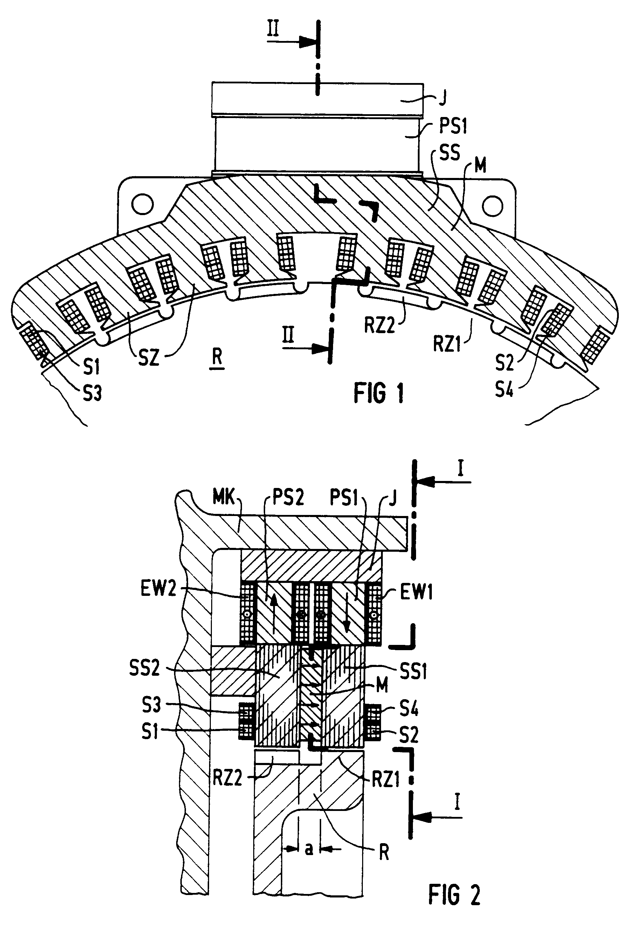

Figur 1 zeigt einen einzelnen Sektorstator SS gemäß Schnittverlauf I-I in Figur 2, der gemäß Figur 2 z.B. an dem Motorkurbelgehäuse MK einer Kfz.-Verbrennungsmaschine befestigt ist und sich über einen Umfangswinkel von beispielsweise ca. 70 Grad über das als Rotor R mitbenutzte Schwungrad der Verbrennungsmaschine erstreckt. Obwohl bei der hier dargestellten Pol- bzw. Wicklungsaufteilung die Funktionstüchtigkeit des erfindungsgemäßen Motors und/oder Generators auch bei nur einem einzigen Sektorstator SS am gesamten Umfang an sich gegeben ist, werden zweckmäßigerweise jeweils paarweise in tangentialem Abstand zueinander angeordnete Sektorstatoren am Umfang des Motorkurbelgehäuses derart angeordnet, daß sie sich etwa gegenüberstehen und bei elektrischer Zusammenschaltung der am Umfang verteilten Sektorstatoren die in jeweils einem Strang induzierten Spannungen insgesamt gleichphasig sind.

Der in Figur 1 bzw. 2 dargestellte Sektorstator SS enthält zwei hintereinander in axialem Abstand a getrennte Sektorstator-Elemente SS1 bzw. SS2. Jedes Sektorstator-Element SS1 bzw. SS2 weist insgesamt acht Statorzähne SZ auf, die axial fluchtend hintereinander angeordnet sind. Als Stator-Arbeitswicklung ist eine 4-strängige Wicklung mit jeweils um 90 Grad el. gegeneinander versetzten Wicklungssträngen S1,S2,S3,S4 gleicher Spulenweite vorgesehen. In dem hier dargestellten Ausführungsbeispiel sind die Wicklungsstränge S1 und S3 um die Zähne der linken Zahngruppe des Sektorstator SS und die Wicklungsstränge S2 und S4 um die Zähne der rechten Zahngruppe des Sektorstators SS jeweils derart gewickelt, daß sie zwei axial hintereinander liegende Statorzähne umschlingen.

Jedes Sektorstator-Element SS1 bzw.SS2 mündet in einen radial überstehenden Polschenkel PS1 bzw.PS2, der jeweils von einem konzentrierten Erregerwicklungsteil EW1 bzw.EW2 umschlungen ist, der vorteilhafterweise als radial aufsteckbare Formspule ausgebildet ist. Die Erregerwicklungsteile EW1 bzw.EW2 sind - wie insbesondere aus Figur 2 ersichtlich - derart an eine steuerbare Gleichspannung angeschlossen, daß sich in den beiden zwischen den Sektorstator-Elementen SS1 und SS2 liegenden Spulenseiten die gleiche Stromrichtung ergibt. Die Polenden der Polschenkel PS1 und PS2 sind durch ein Rückschlußjoch J verbunden.

Als Rotor R ist der äußere Umfang des Kupplungs-Schwungrades eines Kfz.-Verbrennungsmotors derart mitbenutzt, daß am Umfang zwei den Zahnreihen der Statorzähne SZ des ersten und zweiten Sektorstator-Elementes SS1 bzw. SS2 zugeordnete Zahnreihen RZ1 bzw.RZ2 mit gegeneinander in axialem Abstand und axial auf Lücke versetzten Rotorzähnen entstehen. Beide Zahnreihen RZ1 und RZ2 stehen in magnetisch leitender Verbindung, da sie Teile des massiven Eisen-Kupplungsschwungrades sind.

Im axialen Abstandsraum zwischen den Sektorstator-Elementen SS1 bzw. SS2 ist eine axial magnetisierte Dauermagnetanordnung M vorgesehen, die aus einem im wesentlichen den Jochteil abdeckenden Magnetteil und einem im wesentlichen die Statorzähne SZ abdeckenden Magnetteil besteht. Die Magnetisierung der Dauermagnetanordnung M ist derart, daß sie entgegengesetzt zu einem in den axialen Abstandsraum zwischen den Sektorstator-Elementen eintretenden Streufeld des durch die Erregerwicklungsteilen EW1 und EW2 erzeugten Erregerfeldes bei nicht vorhandener Dauermagnetanordnung gerichtet ist.

Ohne Erregerstrom in den Erregerwicklungsteilen EW1 bzw.EW2 reduziert der Rückschluß über das Rückschlußjoch J die magnetische Spannung der Dauermagnetanordnung M am Luftspalt zwischen den Statorzähnen SZ und dem Rotor R und damit auch das Luftspalterregerfeld auf einen unkritischen Restwert; der Rückschluß ist hierfür im Querschnitt zweckmäßigerweise dazu so ausgelegt, daß er auch den Remanenzfluß der Dauermagnetanordnung fast ungesättigt kurzschließen kann. Bei stromführenden Erregerwicklungsteilen EW1 und EW2 wird deren magnetische Spannung am Luftspalt zwischen den Statorzähnen und den Rotorzahnreihen RZ1 bzw. RZ2 des Rotors R am Luftspalt wirksam; ab hinreichender Erregerstromstärke der Erregerwicklungsteile EW1 und EW2 ändert der Fluß durch den Rückschluß des Rückschlußjoches J sein Vorzeichen und geht danach zusammen mit dem Dauermagnetfluß der Dauermagnetanordnung M als wirksamer Erregerfluß über den Luftspalt.

Der Vorteil dieser Kombination von Dauermagneterregung durch die Dauermagnetanordnung M einerseits und elektrischer Erregung durch die Erregerwicklungsteile EW1 bzw.EW2 andererseits wird durch folgende Überlegung verdeutlicht: Hätte man den Stator und/oder Generator allein mit einer Dauermagnetanordnung ausgeführt, so wäre infolge des dann unzulässigen Rückschlusses zwischen den lamellierten Blechpaketen der Sektorstator-Elemente SS1,SS2 das Erregerfeld unveränderlich gewesen; würde die Erregung rein elektrisch über die Erregerwicklungsteile EW1 und EW2 erfolgen, dann hätte sich ein sehr großes unerwünschtes Streufeld zwischen den Stirnflächen der axial in Abstand zueinander voreinanderliegenden lamellierten Blechpakete der Sektorstator-Elemente SS1 und SS2 ergeben.

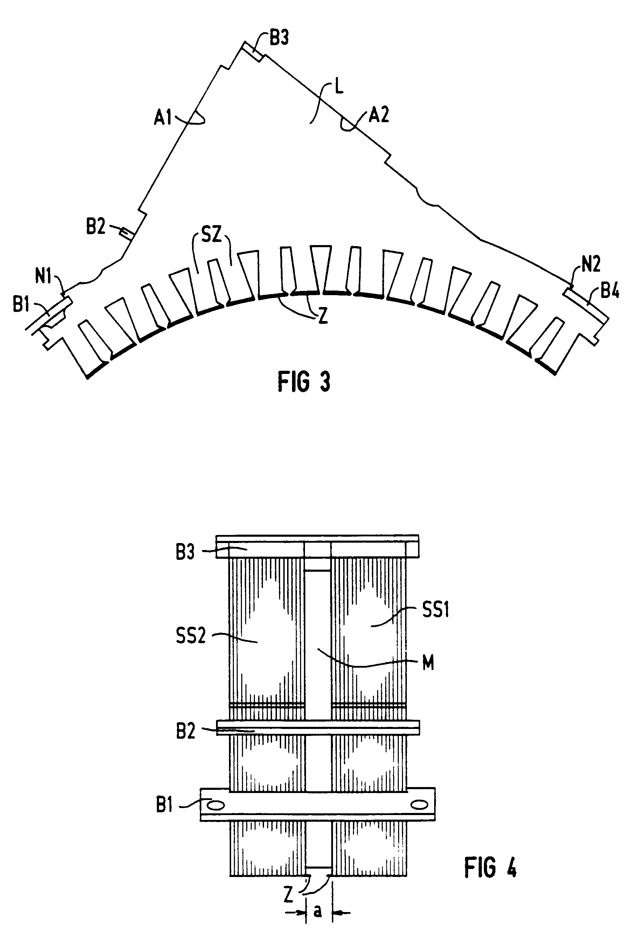

Zur Halterung der Dauermagnetanordnung M zwischen den zugewandten Stirnseiten der Sektorstator-Elemente SS1 und SS2, kann z.B. eine Klebeverbindung vorgesehen werden. Zur zusätzlichen Fixierung und insbesonder zum Schutz gegen ein Herunterfallen der Dauermagnetanordnung M in den radial darunter liegenden Rotorraum ist nach einer Ausgestaltung der Erfindung - wie insbesondere aus Figur 3 ersichtlich - vorgesehen, die radialen Enden der Statorzähne SZ der letzten dem axialen Abstandraum zwischen den SektorstatorElementen zugewandten Bleche derart axial zumindest teilweise umzubiegen, daß sie in Form von Zungen Z als radiale Sicherung unter die Dauermagnetanordnung M greifen.

Zur tangentialen zusätzlichen formschlüssigen Sicherung der Dauermagnetanordnung M können unmagnetische Bügel B1-B4 dienen, die - wie aus Figur 3,4 ersichtlich die beiden Sektorstator-Elemente SS1 bzw. SS2 axial übergreifen und an diesen z.B. angeschweißt sind. Gemäß Figur 3 sind die Bügel B1 und B4 radial außen von Nasen N1 bzw.N2 an den Sektorstator-Elementen SS1 bzw.SS2 derart hinterschneidend übergriffen, daß die am Gehäuse der Verbrennungsmaschine oder der Kupplung befestigten Bügel B1 und B4 gleichzeitig als formschlüssige Sicherung gegen ein Herunterfallen der Sektorstator-Elemente in den Rotorraum mitbenutzt werden können.

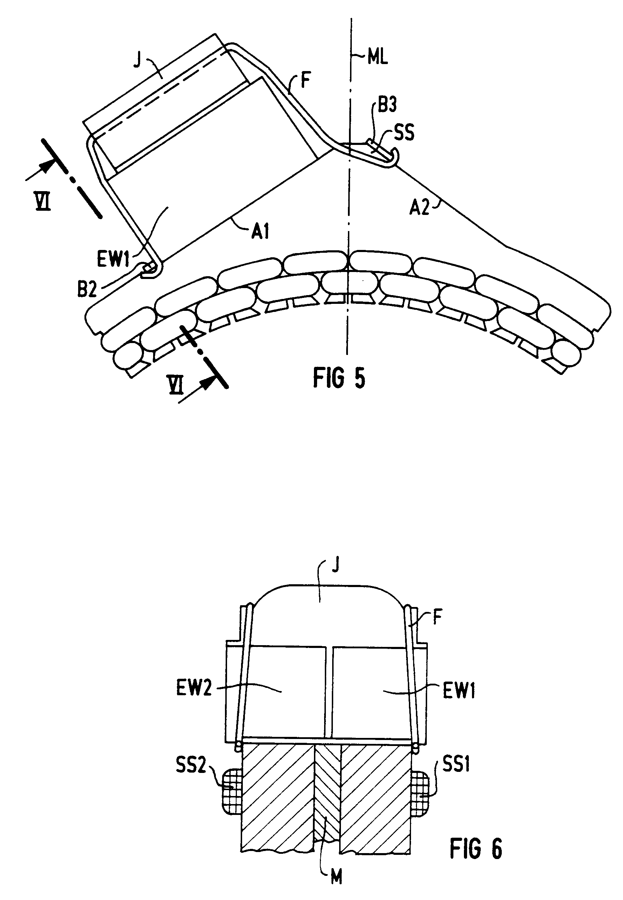

Nach einer weiteren Ausgestaltung der Erfindung ist u.a. zur leichteren Einbringung der Dauermagnetanordnung M zwischen die innere Stirnseite der Sektorstator-Elemente SS1 bzw. SS2 und gleichzeitig zur vorteilhaften Reduzierung der radialen Bauhöhe vorgesehen, die die Erregerwicklungsteile EW1 bzw.EW2 aufnehmenden Polschenkel PS1 bzw.PS2 als diskrete Bauteile auszuführen und aus der radialen Symmetrie-Mittellinie ML eines Sektorstator-Elementes jeweils seitlich versetzt anzuordnen. Dazu sind an den Sektorjochen - wie insbesondere aus Figur 3 bzw. Figur 5 ersichtlich - Auflageflächen A1 bzw.A2 an die Bleche dieser Joche angestanzt, an welche die Polschenkel PS1 bzw.PS2 angelegt und fixiert werden können. Zur Fixierung der mit den überstülpten Erregerwicklungsteilen EW1 und EW2 vorgesehenen Polschenkel PS1 und PS2 an den Sektorstator-Elementen SS1 bzw.SS2 dienen Bügelfedern F, die gleichzeitig das Rückschlußjoch J an die Polschenkel andrücken und mit ihren sektorstatorseitigen Enden um axial über die Sektorstatorelemente SS1 bzw.SS2 überstehende Enden der Bügel B2 bzw.B3 greifen.

In vorteilhafter Weise ist jedes Blechpaket der Sektorstatorelemente mit zwei als Auflage für je einen Polschenkel verwendbaren Flächen A1 bzw.A2 versehen, die nach einer Ausgestaltung der Erfindung spiegelsymmetrisch zueinander zur Symmetrie-Mittellinie ML angeordnet sind; dadurch ist es möglich, entweder in Anpassung an verschiedene Einbauverhältnisse die Polschenkel PS1 bzw.PS2 mit ihren Erregerwicklungsteilen EW1 bzw.EW2 entweder an der linken Auflagefläche A1 oder an der rechten Auflagefläche A2 anzubringen oder im Fall erhöhten Leistungsbedarfes nach dem Einbringen der Dauermagnetanordnung M auf beiden Auflageflächen A1 und A2 je eine Polschenkelanordnung mit Erregerwicklungsteilen und Rückschlußjoch vorzusehen oder insbesondere bei gleichbleibender Erregerleistung die paarweisen Folschenkel in ihrer Baugröße zu vermindern und damit den Zugang der Dauermagnetanordnung zu dem axialen Abstandsraum zwischen den Sektorstator-Elementen zu erleichtern.

## Patentansprüche

1. Nach dem Reluktanz-Prinzip arbeitender Motor und/oder Generator mit folgenden Merkmalen:
a) Der Stator weist über den Umfang des Rotors (R) verteilte, magnetisch voneinander getrennte Sektorstatoren (SS) auf,
b) jeder Sektorstator (SS) enthält zwei gezahnte, in axialem Abstand (a) hintereinander angeordnete Sektorstator-Elemente (SS1 bzw.SS2) mit gemeinsamen, in Nuten zwischen den Stator-Zähnen (SZ) untergebrachten Arbeitswicklungen (Wicklungsstränge S1-S4) auf,
c) jedes Sektorstator-Element (SS1 bzw.SS2) mündet in einem radial überstehenden Polschenkel (PS1 bzw.PS2), die jeweils im Sinne entgegengesetzter Polarität von einem umschlingenden Erregerwicklungsteil (EW1 bzw.EW2) erregbar und radial außen durch ein Rückschlußjoch (J) verbunden sind.
d) in dem axialen Abstandsraum zwischen den Sektorstator-Elementen (SS1 bzw.SS2) ist eine axial magnetisierte Dauermagnetanordnung (M) mit einer der Wicklungserregung in den Sektorstator-Elementen entgegengerichteten Magnetisierung vorgesehen.
e) die Dauermagnetanordnung (M) besteht aus jeweils sowohl den Jochbogen als auch die Statorzähne (SZ) eines Sektorstator-Elementes (SS1 bzw.SS2) abdeckenden Magnetteilen.

2. Nach dem Reluktanz-Prinzip arbeitender Motor und/oder Generator nach Anspruch 1 mit dem Merkmal:
f) Die Dauermagnetanordnung (M) besteht aus einem einstückigen, sowohl den Jochbogen als auch die Statorzähne (RZ) eines Sektorstator-Elementes (SS1 bzw.SS2) abdeckenden Magnetteil (M).

3. Nach dem Reluktanz-Prinzip arbeitender Motor und/oder Generator mit aus Blechen geschichteten Sektorstator-Elementen nach Anspruch 1 oder 2 mit folgendem Merkmal:
g) Zumindest eine der der Dauermagnetanordnung (M) zugewandten Bleche weist ein die Dauermagnetanordnung (M) gegen ein Herausfallen aus dem axialen Zwischenraum zwischen den Sektorstator-Elementen (SS1 bzw.SS2) schützendes Halterungsteil auf.

4. Nach dem Reluktanz-Prinzip arbeitender Motor und/oder Generator nach Anspruch 3 mit dem Merkmal:
h) Als Halterungsteil sind die der Magnetanordnung (M) zugewandten Bleche an den radialen Enden der Stator Zähne (SZ) in Form von unter die Dauermagnetanordnung (M) greifende Zungen (Z) abgebogen.

5. Nach dem Reluktanz-Prinzip arbeitender Motor und/oder Generator mit aus Blechen geschichteten Sektorstator-Elementen nach einem der Ansprüche 1-4 mit folgendem Merkmal:
i) Die Sektorstator-Elemente (SS1 bzw.SS2) eines Sektorstators (SS) sind durch mit den Blechen formschlüssig und/oder kraftschlüssig verbundene unmagnetische Befestigungsbügel (B1-B4) übergriffen.

6. Nach dem Reluktanz-Prinzip arbeitender Motor und/oder Generator nach einem der Ansprüche 1-5 mit dem Merkmal:
j) Die Polschenkel (PS1 bzw. PS2) sind zu einer radialen Symmetrie-Mittellinie (ML) des Sektorstators (SS) seitlich versetzt.

7. Nach dem Reluktanz-Prinzip arbeitender Motor und/oder Generator nach Anspruch 6 mit dem Merkmal:
k) Die Polschenkel (PS1 bzw.PS2) sind als diskrete Bauteile jeweils gegen eine korrespondierende Auflagefläche (A1 bzw.A2) der Sektorstator-Elemente (SS1 bzw.SS2) angelegt und fixiert.

8. Nach dem Reluktanz-Prinzip arbeitender Motor und/oder Generator nach Anspruch 7 mit dem Merkmal:
l) Die Sektorstator-Elemente (SS1 bzw.SS2) weisen einen zur Symmetrie-Mittellinie (ML) spiegelsymmetrischen Blechschnitt mit einer ersten Auflagefläche (A1) und einer dazu spiegelsymmetrischen zweiten Auflagefläche (A2) auf.

## Claims

1. Motor and/or generator operating on the reluctance principle, having the following features:
a) the stator has sector stators (SS) which are distributed over the circumference of the rotor (R) and are separated from one another magnetically,
b) each sector stator (SS) contains two toothed sector stator elements (SS1 and SS2) which are arranged at an axial distance (a) one behind the other and have common working windings (winding lengths S1-S4) which are accommodated in grooves between the stator teeth (SZ),
c) each sector stator element (SS1 and SS2) leads into a radially protruding pole leg (PS1 and PS2) which can be excited in each case with opposite polarity by a wrapping exciter winding component (EW1 and EW2) and are connected radially on the outside by means of a yoke (J),
d) an axially magnetized permanent magnet arrangement (M) with magnetization in the opposite direction from the winding excitation in the sector stator elements is provided in the axial spacing between the sector stator elements (SS1 and SS2),
e) the permanent magnet arrangement (M) consists of magnet components which cover in each case both the yoke bow and the stator teeth (SZ) of a sector stator element (SS1 and SS2).

2. Motor and/or generator, operating according to the reluctance principle, according to Claim 1 with the feature:
f) that the permanent magnet arrangement (M) consists of a single-component magnet component (M) which covers both the yoke bow and the stator teeth (RZ) of a sector stator element (SS1 and SS2).

3. Motor and/or generator, operating according to the reluctance principle, with sector stator elements layered with laminations, according to Claim 1 or 2 with the following feature:
g) at least one of the laminations facing the permanent magnet arrangement (M) has a mount component which protects the permanent magnet arrangement (M) against falling out of the axial space between the sector stator elements (SS1 and SS2).

4. Motor and/or generator, operating according to the reluctance principle, according to Claim 3 with the feature:
h) that the laminations facing the magnet arrangement (M) are bent at the radial ends of the stator teeth (SZ), as a mount component, in the form of tongues (Z) which engage under the permanent magnet arrangement (M).

5. Motor and/or generator, operating according to the reluctance principle, with sector stator elements, layered with laminations, according to one of Claims 1 to 4 with the following feature:
i) the sector stator elements (SS1 and SS2) of a sector stator (SS) are engaged over by non-magnetic attachment bars (B1-B4) which are connected to the laminations in a positively engaging and/or frictionally engaging fashion.

6. Motor and/or generator, operating according to the reluctance principle, according to one of Claims 1 to 5, with the feature:
j) that the pole legs (PS1 and PS2) are offset laterally with respect to a radial central line (M) of symmetry of the sector stator (SS).

7. Motor and/or generator, operating according to the reluctance principle, according to Claim 6 with the feature:
k) that the pole legs (PS1 and PS2) are rested and fixed, as discrete components, in each case against a corresponding supporting face (A1 and A2) of the sector stator elements (SS1 and SS2).

8. Motor and/or generator, operating according to the reluctance principle, according to Claim 7 with the feature:
l) that the sector stator elements (SS1 and SS2) have a lamination section, which is mirror-inverted with respect to the central line of symmetry (ML) and has a first supporting face (A1) and a second supporting face (A2) which is mirror-inverted with respect thereto.

## Revendications

1. Moteur et/ou générateur fonctionnant selon le principe de la reluctance et présentant les caractéristiques suivantes :
a) le stator possède des secteurs statoriques (SS) qui sont répartis sur la périphérie du rotor (R) et qui sont séparés magnétiquement les uns des autres,
b) chaque secteur statorique (SS) contient deux éléments dentés (SS1 et SS2), qui sont disposés à une certaine distance axiale (a) l'un derrière l'autre, et comportent des enroulements de travail communs (faisceaux d'enroulement S1-S4), logés dans des encoches présentes entre les dents (SZ) du stator,
c) chacun des éléments de secteur (SS1 ou SS2) du stator se prolonge par une partie polaire saillante (PS1 ou PS2), qui fait saillie radialement, les parties saillantes pouvant être excitées chacune, dans le sens d'une polarité opposée, par une partie enveloppante (EW1 ou EW2) de l'enroulement d'excitation et étant reliées radialement à l'extérieur par une culasse de retour de flux (J),
d) dans l'espace axial présent entre les éléments (SS1 et SS2) de secteurs du stator est prévu un dispositif à aimant permanent (M) aimanté axialement et possédant une aimantation dirigée en sens opposé de l'enroulement d'excitation dans les éléments des secteurs du stator,
e) le dispositif à aimant permanent (M) est constitué par des éléments magnétiques qui recouvrent respectivement aussi bien l'arc de culasse que les dents (SZ) d'un élément de secteur (SS1 ou SS2) du stator.

2. Moteur et/ou générateur fonctionnant selon le principe de la reluctance suivant la revendication 1, présentant la caractéristique suivante :
f) le dispositif à aimant permanent (M) est constitué par un élément magnétique d'un seul tenant (M), qui recouvre aussi bien l'arc de culasse que les dents (RZ) d'un élément de secteur (SS1 ou SS2) du stator.

3. Moteur et/ou générateur fonctionnant selon le principe de la reluctance et comportant des éléments de secteur de stator formés de tôles superposées, suivant la revendication 1 ou 2, présentant la caractéristique suivante :
g) au moins l'une des tôles tournées vers le dispositif à aimant permanent (M) possède une partie de retenue qui empêche le dispositif à aimant permanent (M) de tomber hors de l'espace axial présent entre les éléments (SS1 ou SS2) des secteurs du stator.

4. Moteur et/ou générateur fonctionnant selon le principe de la reluctance suivant la revendication 3, présentant la caractéristique suivante :
h) comme élément de retenue, les tôles, tournées vers le dispositif à aimant (M), sont repliées, au niveau des extrémités radiales des dents (SZ) du stator sous la forme de languettes (Z) qui s'engagent au-dessous du dispositif à aimant permanent (M).

5. Moteur et/ou générateur fonctionnant selon le principe de la reluctance, comportant des éléments des secteurs du stator formés par un emplilage de tôles, suivant l'une des revendications 1-4, présentant la caractéristique suivante :
i) par-dessus les éléments (SS1 ou SS2) d'un secteur (SS) du stator s'engagent des étriers de fixation amagnétiques (B1-B4), qui sont reliés aux tôles selon une liaison par formes complémentaires et/ou selon une liaison de force.

6. Moteur et/ou générateur fonctionnant selon le principe de la reluctance suivant l'une des revendications 1-5, présentant la caractéristique suivante :
j) les parties polaires saillantes (PS1 et PS2) sont décalées latéralement par rapport à un axe central radial de symétrie (ML) du secteur (SS) du stator.

7. Moteur et/ou générateur fonctionnant selon le principe de la reluctance suivant la revendication 6, présentant la caractéristique suivante :
k) les parties polaires saillantes (PS1 et PS2) sont appliquées et fixées sous la forme de composants discrets respectivement contre des surfaces d'appui correspondantes (A1 et A2) des éléments (SS1 et SS2) des secteurs du stator.

8. Moteur et/ou générateur fonctionnant selon le principe de la reluctance, suivant la revendication 7, présentant la caractéristique suivante :
l) les éléments (SS1 et SS2) des secteurs du stator possèdent une partie en tôle symétrique par rapport à l'axe central de symétrie (ML) et possédant une première surface d'application (A1) et une seconde surface d'application (A2) symétrique de la précédente.
